# EUROPEAN PATENT APPLICATION

(11) **EP 4 769 775 A1**
(43) Date of publication of application: **01.07.2026**
(21) Application number: 25848757.8
(22) Date of filing: 15.07.2025
(51) Int. Cl.: H01M 50/383, H01M 50/342, H01M 50/249

(54) **BATTERY MODULE, BATTERY PACK AND VEHICLE INCLUDING SAME**

(30) Priority: 31.07.2024 KR 20240101823
(71) Applicant: LG ENERGY SOLUTION, LTD., Seoul 07335 (KR)
(72) Inventor: UHM, Jae-Yong, Yuseong-gu, Daejeon 34122 (KR)
(74) Representative: BCKIP Part mbB
(86) International application number: PCT/KR2025/010375
(87) International publication number: WO 2026/029432

(57) **Abstract**

The present disclosure relates to a battery module accommodated in a pack case, which includes: a plurality of battery cells; a module case configured to accommodate the plurality of battery cells; and an expansion member provided outside the module case and configured to expand at least partially in an outward direction of the module case due to heat.

## Description

### TECHNICAL FIELD

The present disclosure relates to a battery module, and a battery pack and vehicle including the same.

This application is based on and claims priority from Korean Patent Application No. 10-2024-0101823, filed on July 31, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. When high output voltage is required, multiple battery cells may be connected in series to form a battery module or battery pack. In addition, to increase charge/discharge capacity, multiple battery cells may be connected in parallel to configure a battery module or battery pack. Accordingly, the number of battery cells included in the battery module or pack may be variously configured depending on the required output voltage or charge/discharge capacity.

Meanwhile, since a battery cell involves a chemical reaction during charging and discharging, its performance may deteriorate when used in environments exceeding the appropriate temperature. Moreover, if thermal control is not properly maintained at the appropriate temperature, there remains a potential risk of unexpected ignition or explosion. In addition, a battery module is configured in a structure in which such battery cells are densely stored inside a module frame. Therefore, if a thermal event occurs in any one of the battery cells, the high-temperature gas and flame discharged therefrom may propagate to adjacent battery cells, leading to a chain reaction of battery cell explosions, which poses a significant safety risk.

Therefore, it is necessary to develop a structure capable of suppressing and delaying thermal propagation by more reliably partitioning and separating battery cells, thereby preventing, even when a thermal event occurring in some battery cells within the battery module, gases or flames from spreading to other battery cells and triggering thermal runaway within the battery module.

### DISCLOSURE

### Technical Problem

The present disclosure is designed to solve the problems of the related art, and therefore the present disclosure is directed to providing a battery module capable of effectively suppressing and delaying thermal runaway propagation between battery cells by reliably partitioning and separating the battery cells.

The present disclosure is also directed to providing a battery pack and vehicle that include such a battery module.

In addition, the present disclosure is also directed to providing a battery pack and vehicle that include such a battery module.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery module accommodated in a pack case, which may include: a plurality of battery cells; a module case configured to accommodate the plurality of battery cells; and an expansion member provided outside the module case and configured to expand at least partially in an outward direction of the module case due to heat.

The expansion member may be formed of an intumescent fire protection material.

The expansion member may be configured to expand to partition a space between the module case and the pack case.

The expansion member may be configured to expand to come into contact with the pack case.

A plurality of venting holes may be formed in at least one surface of the module case to discharge venting gases generated from the battery cell to the outside, and the expansion member may be provided between adjacent venting holes.

The expansion member may be configured to suppress venting gases discharged through the venting hole from heading toward another venting hole.

The expansion member may be configured to expand along a movement direction of venting gases discharged from the venting hole.

The expansion member may be configured to have an expansion rate that varies at least partially depending on its position.

In another aspect of the present disclosure, there is provided a battery pack including a battery module according to the present disclosure.

In another aspect of the present disclosure, there is provided a vehicle including a battery pack according to the present disclosure.

In another aspect of the present disclosure, there is provided a battery pack including: a plurality of battery cells; a pack case configured to accommodate the plurality of battery cells; and an expansion member provided between the plurality of battery cells and the pack case, and configured to expand at least partially in an outward direction due to heat.

### Advantageous Effects

According to one aspect of the present disclosure, when a thermal event occurs in a battery cell, the expansion of an expansion member can reliably partition and separate the venting path outside the module case. In particular, according to this aspect of the present disclosure, high-temperature gases or flames released into the external space of the module case may be suppressed from moving along the stacking direction of the battery cells.

That is, according to this aspect of the present disclosure, even if a thermal event occurs in some battery cells within a battery module, the gases or flames may be effectively prevented or delayed from spreading to other battery cells within the battery module and causing thermal runaway. Therefore, the safety and reliability of the battery module may be guaranteed.

In addition, according to another aspect of the present disclosure, it is possible to prevent or delay events resulting from thermal runaway, such as fire or explosion, in a battery pack including multiple battery modules or a device equipped with them.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery module according to an embodiment of the present disclosure.
FIG. 2 is an exploded perspective view of a battery module according to an embodiment of the present disclosure.
FIG. 3 is a drawing illustrating an expansion member expanded in a battery module according to an embodiment of the present disclosure.
FIG. 4 is a cross-sectional view of a battery module according to an embodiment of the present disclosure, which may be a cross-sectional view taken along line I - I' in FIG. 1.
FIG. 5 is a cross-sectional view of an expansion member expanded in a battery module according to an embodiment of the present disclosure.
FIG. 6 is a perspective view of an expansion member, included in a battery module, at least partially expanded according to an embodiment of the present disclosure.
FIG. 7 is a cross-sectional view of a battery module according to another embodiment of the present disclosure.
FIG. 8 is an exploded perspective view schematically illustrating a battery pack including a battery module according to an embodiment of the present disclosure.
FIG. 9 is a cross-sectional view of a battery pack according to an embodiment of the present disclosure.
FIG. 10 is a drawing illustrating an expansion member at least partially expanded in a battery pack according to an embodiment of the present disclosure.
FIG. 11 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

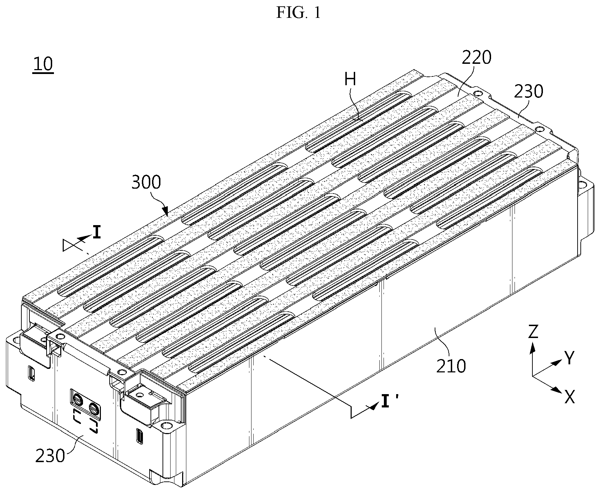

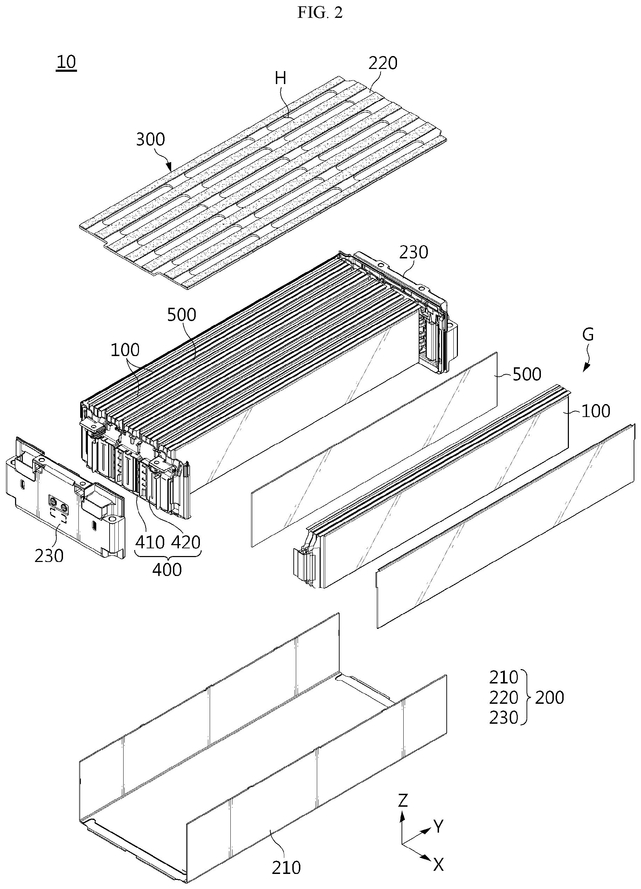

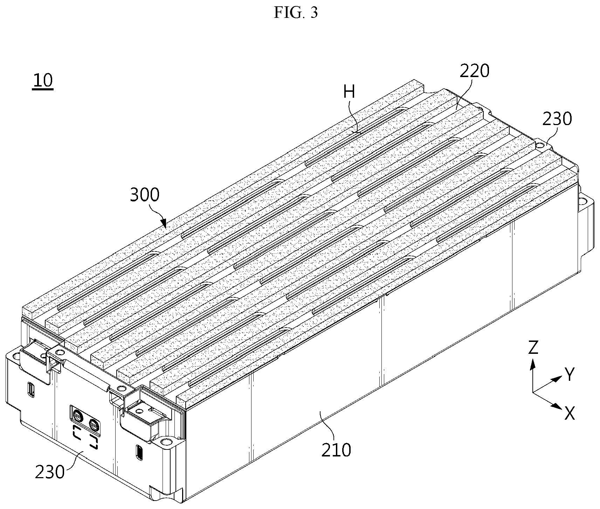

FIG. 1 is an overall perspective view of a battery module according to an embodiment of the present disclosure, and FIG. 2 is an exploded perspective view of a battery module according to an embodiment of the present disclosure. In addition, FIG. 3 is a drawing illustrating an expansion member expanded in a battery module according to an embodiment of the present disclosure.

Referring to FIGS. 1 to 3, a battery module 10 according to an embodiment of the present disclosure may include a battery cell 100, a module case 200, and an expansion member 300.

Referring to FIG. 2, a plurality of battery cells 100 may be included. In addition, although not shown in the drawings, the plurality of battery cells 100 may include an electrode assembly, a cell case that accommodates the electrode assembly, and electrode leads connected to the electrode assembly and extending outside the cell case to function as electrode terminals. In this case, the plurality of battery cells 100 may be electrically connected to each other.

The battery cell 100 may be a pouch-type secondary battery. The cell case of such a pouch-type secondary battery may be configured as a pouch in which a metal layer made of aluminum is interposed between polymer layers.

As illustrated in FIG. 2, the plurality of battery cells 100 may be disposed side by side in the front-back direction (Y-axis direction) while standing in the vertical direction (Z-axis direction).

The present disclosure is not limited to a specific type or shape of the battery cell 100, and various battery cells 100 known at the time of filing the present disclosure may be applied to configure the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 100.

Referring to FIG. 2, the battery module 10 of the present disclosure may further include a busbar frame assembly 400. The busbar frame assembly 400 may be configured to cover at least one side of the plurality of battery cells 100. In the present embodiment, as illustrated in FIG. 2, a busbar frame assembly 400 may be coupled to the front and rear side of the plurality of battery cells 100.

The busbar frame assembly 400 may include a busbar frame 410 and a plurality of busbars 420. The busbar frame 410 may be configured to be coupled to the front and rear side of the plurality of battery cells 100. The busbar frame 410 may have slits through which the electrode leads 110 of the battery cells 100 may extend in the +Y or -Y-axis direction. In addition, the busbar frame 410 may be formed of an electrically insulating material, such as a plastic material, and may be configured to allow a busbar 420 to be attached to the outer surface thereof.

A plurality of busbars 420 are used to connect the battery cells 100 in series and/or parallel, and may be made of a metal material, such as copper, aluminum, or nickel, in a rod shape. The electrode leads 110 of the battery cells 100 may pass through the slit in the busbar frame 410 and extend outward from the busbar frame 410, so that the extended portions may be attached to the surface of the busbar 420 by welding or other methods.

The module case 200 may be configured to accommodate a plurality of battery cells 100. Specifically, the module case 200 may be configured to have an inner space, and a plurality of battery cells 100 and a busbar frame assembly 400 may be accommodated in the inner space.

The expansion member 300 may be provided outside the module case 200. The expansion member 300 may be configured to cover the outer surface of the module case 200. The expansion member 300 may be configured to cover at least one surface of the module case 200. For example, as disclosed in the embodiment illustrated in FIG. 1, the expansion member 300 may be provided on the upper outer surface of the module case 200.

The expansion member 300 may be applied to the outer surface of the module case 200 and have a very small thickness. The expansion member 300 may be configured to be flat on the outer surface of the module case 200.

Referring to FIG. 3, the expansion member 300 may be configured to expand at least partially due to heat. The expansion member 300 may be configured to expand at a specific temperature. For example, the expansion member 300 may be configured to expand at 200 to 300°C.

In addition, the expansion member 300 may expand in an outward direction of the module case 200. That is, the expansion member 300 may expand outward from the module case 200 due to heat, such as venting gas or flame, generated when a thermal event occurs in the battery cell 100.

According to the above-implemented configuration of the present disclosure, when a thermal event occurs in the battery cell 100, the expansion member 300 may expand in the outward direction of the module case 200 due to heat, thereby ensuring that the venting path is reliably partitioned and separated on the outside of the module case 200. In particular, according to the above-implemented configuration of the present disclosure, high-temperature gases or flames discharged to the external space of the module case 200 may be suppressed from moving along the stacking direction of the battery cell 100.

That is, according to the above-implemented configuration of the present disclosure, even if a thermal event occurs in some battery cells 100 within the battery module 10, it is possible to effectively prevent or delay gases or flames from spreading to other battery cells 100 and causing thermal runaway. Therefore, the safety and reliability of the battery module 10 may be guaranteed.

The expansion member 300 may be made of a material having flame-retardant and/or fire-resistant properties. The expansion member 300 may be formed through direct foaming on the outer surface of the module case 200. Such a material may be easily formed as a coating layer on the outer surface of the assembled module case 200 using a foam coating method.

For example, the expansion member 300 may be formed of an intumescent fire protection material. An intumescent fire protection material is a coating material that foams when exposed to heat, thereby forming a char layer. The coating layer of the intumescent fire protection material rapidly expands and thickens to 50 to 100 times its original thickness. The char layer may prevent heat and air from penetrating the coating layer, thereby providing heat insulation and combustion delay effects. This prevents a decrease in the strength of the metal module case 200.

According to the above-implemented configuration of the present disclosure, compared to attaching a separately prepared sheet-shaped refractory member to the module case 200, the process of separately manufacturing the refractory member according to the size of the outer surface of the module case 200 may be omitted, thereby reducing costs and time when manufacturing the battery module.

The expansion member 300 may be a conformal coating layer formed along the outer surface of the module case 200. In particular, the expansion member 300 may be a foam coating layer that is conformally coated. Here, conformal coating refers to applying a thin coating for purposes such as corrosion prevention. As a conformal coating material, the intumescent fire protection material may be used, as described above.

Using the conformal coating method, the expansion member 300 may be coated with a uniform thickness along the curvature of the outer surface of the module case 200.

In addition, according to the above-implemented configuration of the present disclosure, the drying time may be shortened to reduce manufacturing time, and the coating may be easily inspected, thereby improving productivity. In addition, since the coating may be applied along the curvature of the outer surface of the module case 200 with a uniform thickness, it is possible to prevent the metal material of the module case 200 from being directly exposed to the outside in any part, and the thermal conductivity and heat radiation prevention effects may be reliably maintained for the entire area of the module case 200.

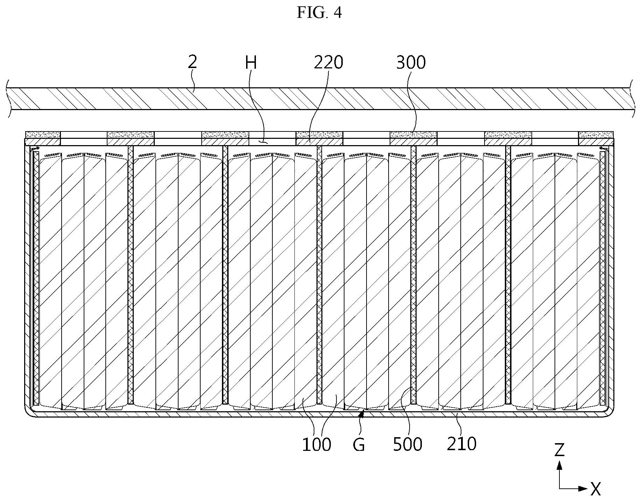

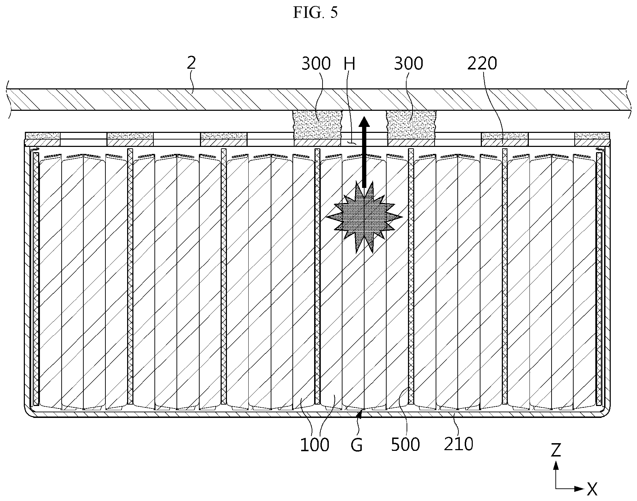

FIG. 4 is a cross-sectional view of a battery module according to an embodiment of the present disclosure, which may be a cross-sectional view taken along line I - I' in FIG. 1. In addition, FIG. 5 is a cross-sectional view of an expansion member expanded in a battery module according to an embodiment of the present disclosure.

Specifically, referring to FIGS. 4 and 5, the expansion member 300 may be configured to expand to partition a space between the module case 200 and the pack case 2.

If a thermal event occurs in a battery cell 100, venting gases or flames may flow into the space between the module case 200 and the pack case 2. Such venting gases or flames are likely to move along the stacking direction (left-right direction) of the battery cells 100 in the space between the module case 200 and the pack case 2 and spread to adjacent battery cells 100. However, according to the above-implemented configuration of the present disclosure, when a thermal event occurs in a battery cell 100, high-temperature venting gases or flames may be suppressed from spreading to adjacent battery cells 100 along the stacking direction (left-right direction) of the battery cells 100 in the space between the module case 200 and the pack case 2.

In addition, the expansion member 300 may be configured to expand and come into contact with the pack case 2. That is, the expansion member 300 may be configured to fill the space between the module case 200 and the pack case 2.

According to the above-implemented configuration of the present disclosure, the gap between the expansion member 300 and the pack case 2 may be minimized, thereby more reliably partitioning and separating the space between the module case 200 and the pack case 2. Therefore, thermal runaway propagation to adjacent battery cells 100 may be effectively prevented.

Referring to FIG. 2 and other drawings, the module case 200 may include a case body 210 and a top plate 220. The case body 210 may be configured to accommodate the battery cells 100 seated thereon. The case body 210 may be made of a metal material with rigidity and heat-resistant properties to physically or chemically protect the accommodated battery cells 100.

In this case, the case body 210 may have an upper opening and front and rear openings. For example, the case body 210 may be configured as a U-frame. In the case where the case body 210 is configured as a U-frame, it may be configured to cover both side surfaces and the lower surface of the plurality of battery cells 100. The case body 210 may include left and right plates that cover both side surfaces of the plurality of battery cells 100, and a lower plate that covers the lower surface of the plurality of battery cells 100. In addition, The left plate, right plate, and lower plate may be configured in an integrated form.

The top plate 220 may be configured to form the upper surface of the module case 200. In the case where the case body 210 is configured as a U-frame, the top plate 220 may be coupled to cover the upper opening of the case body 210. The top plate 220 may be welded to the case body 210. In this case, the top plate 220 and the case body 210 may be combined into a rectangular tube with front and rear openings.

In addition, the module case 200 may include an end plate 230 provided on the front and rear openings of the case body 210. The end plate 230 may be welded to the case body 210. Meanwhile, although not shown for convenience, the end plate 230 may have, for example, an inner side formed of an insulating material and an outer side formed of a metal material. In addition, the end plate 230 may be partially provided with holes or slits for exposing components that are required to be exposed to the outside, such as a positive electrode terminal and negative electrode terminal or a connector of the battery module 10.

In addition, the module case 200 may be formed in various other shapes. For example, the module case 200 may include a box-shaped lower case having an upper opening and an upper cover configured to cover the upper opening of the lower case. Alternatively, the module case 200 may be configured as a mono-frame. For example, the case body 210 may be configured in the form of a rectangular tube having an upper surface, a lower surface, a left surface, and a right surface, and having front and rear openings.

Meanwhile, as illustrated in FIGS. 1 to 5, a venting hole H may be formed in the module case 200. The venting hole H may be configured to discharge venting gases generated from the battery cell 100 to the outside of the module case 200. The venting hole H may be formed on one surface of the module case 200 and may enable directional venting in one direction. For example, the venting hole H may be formed in the upper surface of the module case 200.

For example, the venting hole H may be formed in the top plate 220, enabling directional venting in the upward direction of the battery module 10 through the venting hole H. A plurality of venting holes H may be provided at regular intervals in the horizontal direction (X-axis and Y-axis directions). The venting hole H may be configured to extend along the longitudinal direction of the battery cell 100.

As described above, the venting hole H provided in the upper surface of the module case 200 may be configured to discharge gases or flames generated within the battery module 10 when thermal runaway occurs in the battery module 10 to the outside of the battery module 10. The remaining portion of the module case 200, excluding the venting holes H, may be sealed, so that gases or flames may be discharged in a straight line toward the venting holes H.

According to the above-implemented configuration of the present disclosure, regardless of where a thermal event occurs in the battery cell 100, gases or flames generated in the battery cell 100 may be discharged to the outside of the battery module 10 through specific venting holes H provided above the battery cell 100, thereby facilitating venting.

Referring to FIGS. 4 and 5, the expansion member 300 may be provided between adjacent venting holes H. For example, a plurality of venting holes H may be arranged in a row along the longitudinal direction of the battery cells 100 to form a venting hole array, and a plurality of venting hole arrays may be arranged along the stacking direction of the battery cells 100. The expansion member 300 may be provided between adjacent venting hole arrays. The venting hole array may be disposed for each cell group G.

Specifically, when venting gases or flames generated from a battery cell 100 included in a certain cell group G are discharged through a venting hole H, the expansion members 300 provided on both sides of the venting hole H may expand. Accordingly, the expansion members 300 may be configured to suppress the venting gases discharged from the venting hole H from heading toward other venting holes H.

According to the above-implemented configuration of the present disclosure, even if a thermal event occurs in a battery cell 100 included in a specific cell group G and venting gases or flames are discharged through a venting hole H corresponding to the cell group G, the venting gases or flames flowing between the module case 200 and the pack case 2 may be blocked by the expanded expansion members 300 and prevented from moving to other venting holes H. That is, according to the above-implemented configuration of the present disclosure, since the venting paths between the cell groups G may be partitioned, thermal runaway between the battery cells 100 may be prevented or delayed.

Referring to FIGS. 4 and 5, the battery module 10 according to an embodiment of the present disclosure may further include a barrier member 500. The barrier member 500 may be provided in the inner space of the module case 200. The barrier member 500 may be provided between the battery cells 100. At least one barrier member 500 may be included in a single battery module 10. A plurality of barrier members 500 may be provided along one direction in which the battery cells 100 are arranged. The barrier member 500 may be configured to be disposed for each group of one or more battery cells 100.

In particular, the barrier member 500 may be configured to partition the plurality of battery cells 100. The barrier member 500 may be configured to group the plurality of battery cells 100. For example, as illustrated in FIG. 4, the barrier member 500 may be disposed for each group of four battery cells 100, grouping the battery cells 100 into groups of four. Therefore, a cell group G including four battery cells 100 may be partitioned by the barrier members 500.

The barrier member 500 may be configured to block heat generated when a thermal event occurs within the battery module 10. That is, the barrier member 500 may be configured to block the flow of heat or fluid between the battery cells 100. Here, the fluid may include venting gases, flames, particles, or the like.

To this end, the barrier member 500 may be made of a material with excellent heat and/or fire-resistant properties. Accordingly, the barrier member 500 may be configured to maintain a sealed structure without deformation even under high heat and pressure. For example, the barrier member 500 may be formed as an insulating pad that is thinner than the battery cell 100. In addition, the barrier member 500 may be configured in the form of a compressive pad made of, for example, a material such as silicone or aerogel.

According to the above-implemented configuration of the present disclosure, even if a thermal event occurs in any of the battery cells 100 grouped by the barrier members 500, venting gases, flames, and/or particles may be suppressed from moving to other groups of battery cells 100. This may effectively prevent or delay the propagation of thermal runaway between the battery cells 100. Therefore, the safety and reliability of the battery module 10 may be guaranteed.

In addition, according to the above-implemented configuration of the present disclosure, the barrier member 500 may compress the battery cells 100 when they swell, thereby contributing to the structural rigidity of the battery cells 100.

The barrier member 500 may be provided between the venting holes H. In addition, the expansion member 300 may be provided at a position corresponding to the barrier member 500.

According to the above-implemented configuration of the present disclosure, since the cell groups G are partitioned by the barrier members 500, venting paths may be further separated into individual cell groups G provided between adjacent barrier members 500. Therefore, thermal runaway between the battery cells 100 may be further suppressed.

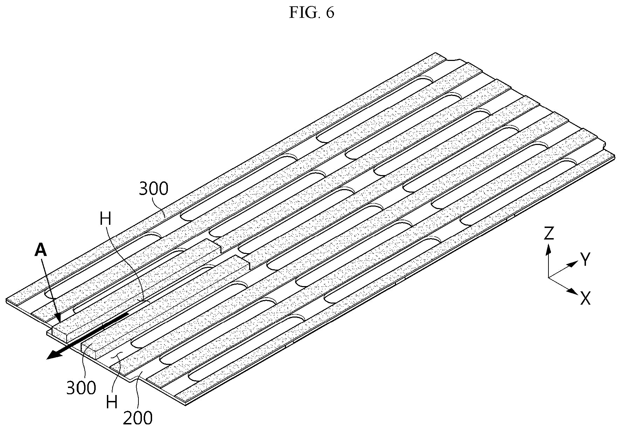

FIG. 6 is a perspective view illustrating a state in which an expansion member, included in a battery module, is at least partially expanded according to an embodiment of the present disclosure.

The expansion member 300 may be configured to gradually expand along the movement direction of venting gas or flame. Specifically, the expansion member 300 may be configured to expand along the movement direction of venting gases discharged from the venting holes H. Accordingly, the expansion member 300 may expand entirely or only partially.

For example, as disclosed in the embodiment illustrated in FIG. 6, when a thermal event occurs in a battery cell 100 of a cell group G, venting gases or flames are discharged outside the module case 200 through a venting hole H corresponding thereto, only the expansion members 300 provided around the venting hole H may expand in the outward direction of the module case 200 (see part A in FIG. 6).

According to the above-implemented configuration of the present disclosure, a path may be formed by the expansion members 300 to guide the venting direction around the venting hole H (see the bold arrow in FIG. 6). As a result, venting gases or flames may be quickly guided in a specific direction to prevent other battery cells 100 from being affected. In addition, according to the above-implemented configuration of the present disclosure, venting gases or flames may be blocked by the expansion members 300 and prevented from moving toward other venting holes H.

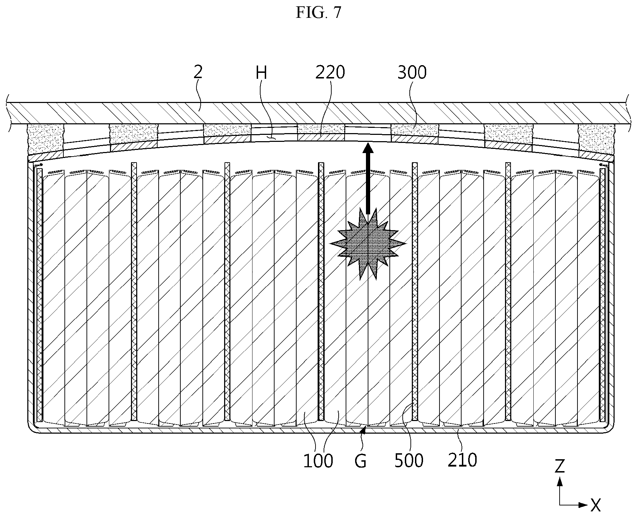

FIG. 7 is a cross-sectional view of a battery module according to another embodiment of the present disclosure.

The expansion member 300 may be configured to have a differential expansion rate, at least in part, depending on its position. Here, the expansion rate may be a value of a percentage (%) obtained by dividing the volume of the expansion member 300 after the expansion member 300 expands at a specific temperature by the volume before the expansion member 300 expands. The expansion rate of the expansion member 300 may be configured to vary depending on the position of the expansion member 300 by differentiating composition ratios or materials of the expansion member 300.

For example, the expansion member 300 may have an expansion rate that varies from the center to the periphery of the module case 200. As a result, when a thermal event occurs within the battery module 10, the expanded volume or height of the expansion member 300 may vary depending on the position.

According to the above-implemented configuration of the present disclosure, since the expansion rate of the expansion member 300 is configured to vary depending on the position such as the position where the module case 200 is easily heated, the expansion member 300 may expand according to the height of the space between the module case 200 and the pack case 2. The expansion rate of the expansion member 300 may be designed experimentally.

In an embodiment, as illustrated in FIG. 7, the expansion member 300 may be configured such that its expansion rate increases at least partially from the center of the module case 200 toward the periphery. In particular, the expansion member 300 provided on the outer surface of the top plate 220 may be configured to have an expansion rate that at least partially varies along the stacking direction of the battery cells 100.

When thermal runaway of the battery cell 100 occurs within the module case 200, the central portion of the top plate 220 may bulge upward. In this case, the edge portion of the top plate 220 may be lifted to cause the top plate 220 to be separated from the case body 210. However, according to the above-implemented configuration of the present disclosure, since the expansion member 300 has an expansion rate that increases from the central portion of the top plate 220 toward its periphery, the expansion member 300 may expand to fully fill the space between the module case 200 and the pack case 2.

In addition, according to the above-implemented configuration of the present disclosure, the expansion member 300 provided on the periphery of the top plate 220 may press the edge portion of the top plate 220. Accordingly, when the expansion member 300 expands, the top plate 220 and the case body 210 may be prevented from being separated, so that the bonding strength between the top plate 220 and the case body 210 may be maintained. Therefore, according to the above-implemented configuration of the present disclosure, the structural stability of the battery module 10 may be secured.

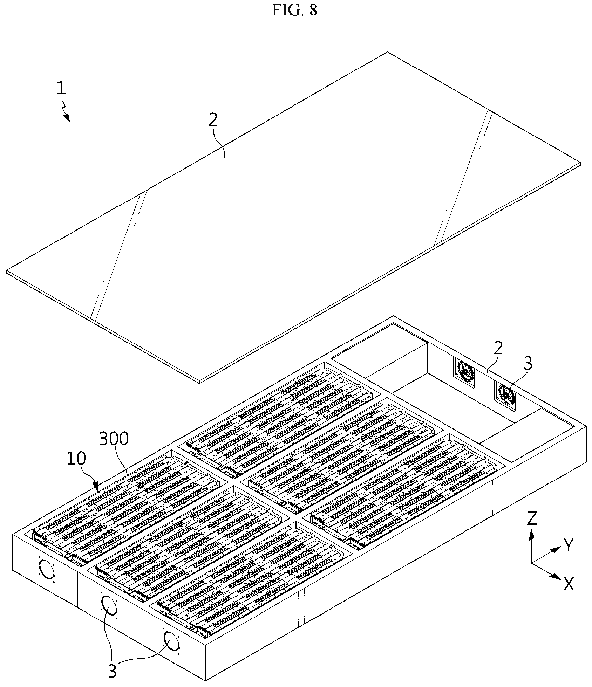

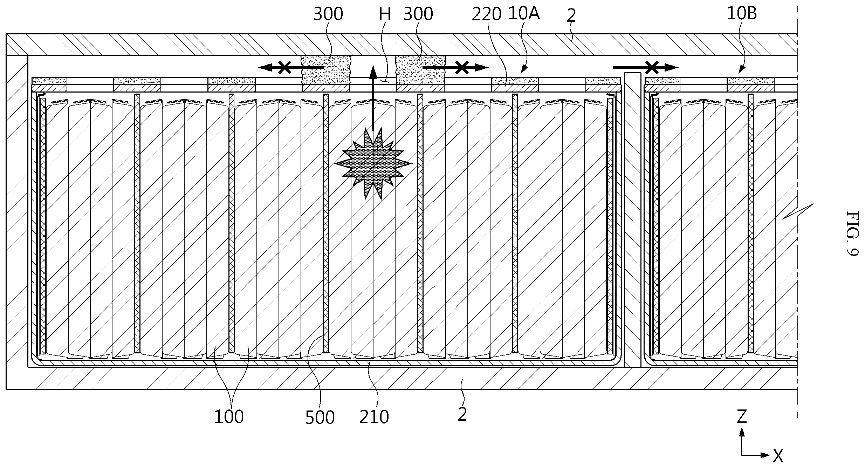

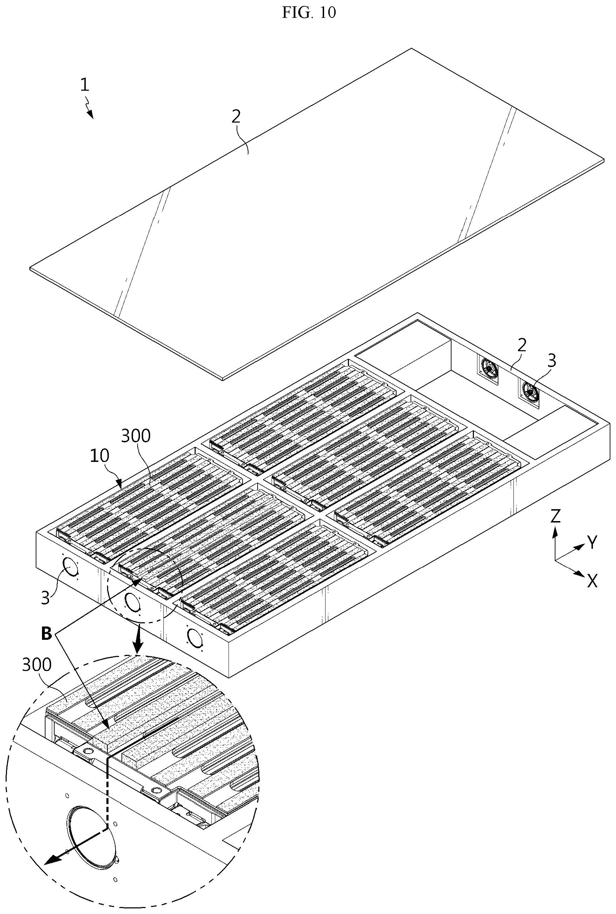

FIG. 8 is an exploded perspective view schematically illustrating a battery pack including a battery module according to an embodiment of the present disclosure, and FIG. 9 is a cross-sectional view of a battery pack according to an embodiment of the present disclosure. In addition, FIG. 10 is a drawing illustrating an expansion member at least partially expanded in a battery pack according to an embodiment of the present disclosure.

Referring to FIG. 8, a battery pack 1 according to an embodiment of the present disclosure may include one or more battery cells 100 or battery modules 10 according to an embodiment of the present disclosure described above. The battery pack 1 according to the present disclosure may further include a pack case 2 that accommodates a BMS (Battery Management System) for integrated control of charging and discharging of one or more battery modules 10, a current sensor, a fuse, and other components described above.

The pack case 2 may include a plurality of plates. For example, the pack case 2 may be configured in a box shape to cover the upper, lower, and side surfaces of the plurality of battery cells 100 or the plurality of battery modules 10. In addition, the pack case 2 may further include a cross-beam configured to partition the plurality of battery cells 100 or the plurality of battery modules 10.

In addition, the battery pack 1 according to an embodiment of the present disclosure may include a venting device 3. The venting device 3 may be provided in the pack case 2. The venting device 3 may be configured to discharge gases generated from the accommodated battery cells 100 to the outside of the pack case 2. The venting device 3 may be configured to be opened due to the pressure of venting gases when the venting gases are generated within the pack case 2 to increase the internal pressure, thereby discharging the venting gases to the outside of the pack case 2.

For example, the venting device 3 may be configured to be opened and closed depending on the internal pressure of the pack case 2. Alternatively, the venting device 3 may be configured in the form of a hole. Meanwhile, the present disclosure is not limited to a specific type or form of the venting device 3, and various venting devices 3 known at the time of filing of the present disclosure may be employed to configure the battery pack 1 of the present disclosure.

The number and position of the venting devices 3 described with reference to the embodiment in FIG. 8 are merely examples, and it should be understood that the number and position of the venting devices may be varied.

In addition, referring to FIGS. 8 and 9, the battery pack 1 according to an embodiment of the present disclosure may include the expansion member 300 described above. The expansion member 300 may be provided for each group of a plurality of battery modules 10. The expansion member 300 may be configured to expand at least partially due to heat, thereby partitioning the space between the module case 200 and the pack case 2.

In addition, according to the above-implemented configuration of the present disclosure, when a thermal event occurs in a battery module 10, the expansion member 300 may expand outward from the module case 200 due to heat, thereby reliably separating the venting path outside the module case 200. In particular, according to the above-implemented configuration of the present disclosure, high-temperature gases or flames discharged into the external space of the module case 200 may be suppressed from moving along the stacking direction of the battery cells 100 or battery modules 10 (see the bold arrows in FIG. 9).

That is, according to the above-implemented configuration of the present disclosure, even if a thermal event occurs within a battery module 10, it is possible to effectively prevent or delay gases or flames from propagating to other battery modules 10 and causing thermal runaway. Therefore, the safety and reliability of the battery pack 1 may be guaranteed.

In particular, in the battery pack 1 according to an embodiment of the present disclosure, as illustrated in FIG. 10, when a thermal event occurs in a battery module 10, the expansion member 300 may be configured to expand along the movement direction of venting gas or flame (see part B in FIG. 10).

According to the embodiment of the present disclosure, a path may be formed by the expansion member 300 to induce a venting direction. Therefore, the venting gases or flames may be quickly guided in a specific direction, thereby preventing other battery cells 100 from being affected.

In particular, according to the above-implemented configuration of the present disclosure, the expansion member 300 may induce venting toward the venting device 3 (see the bold arrow in FIG. 10). This allows the venting gases or flames to move to the venting device 3 and be quickly discharged outside the pack case 2 while minimizing the influence on other battery modules 10. Accordingly, the internal pressure of the pack case 2 may be reduced, thereby suppressing or delaying thermal runaway between the battery modules 10.

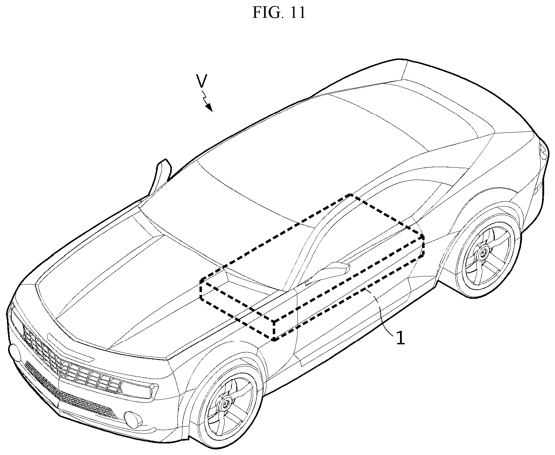

FIG. 11 is a schematic perspective view of a vehicle including a battery pack according to an embodiment of the present disclosure.

Referring to FIG. 11, a vehicle V according to an embodiment of the present disclosure may include one or more battery packs 1 according to an embodiment of the present disclosure, or one or more battery modules 10 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V operates by receiving power from the battery pack 1 or the battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery module accommodated in a pack case, the battery module comprising:
a plurality of battery cells;
a module case configured to accommodate the plurality of battery cells; and
an expansion member provided outside the module case and configured to expand at least partially in an outward direction of the module case due to heat.

2. The battery module of claim 1,
wherein the expansion member is formed of an intumescent fire protection material.

3. The battery module of claim 1,
wherein the expansion member is configured to expand to partition a space between the module case and the pack case.

4. The battery module of claim 1,
wherein the expansion member is configured to expand to come into contact with the pack case.

5. The battery module of claim 1,
wherein a plurality of venting holes are formed in at least one surface of the module case to discharge venting gases generated from the battery cell to an outside, and
wherein the expansion member is provided between adjacent venting holes.

6. The battery module of claim 5,
wherein the expansion member is configured to suppress venting gases discharged through the venting hole from heading toward another venting hole.

7. The battery module of claim 5,
wherein the expansion member is configured to expand along a movement direction of venting gases discharged from the venting hole.

8. The battery pack of claim 1,
wherein the expansion member is configured to have an expansion rate that varies at least partially depending on its position.

9. A battery pack comprising a battery module according to any one of claims 1 to 8.

10. A vehicle comprising a battery pack according to claim 9.

11. A battery pack comprising:
a plurality of battery cells;
a pack case configured to accommodate the plurality of battery cells; and
an expansion member provided between the plurality of battery cells and the pack case, and configured to expand at least partially in an outward direction due to heat.
